# EUROPEAN PATENT APPLICATION

(11) **EP 3 934 055 A1**
(43) Date of publication of application: **05.01.2022**
(21) Application number: 20918881.2
(22) Date of filing: 01.07.2020
(51) Int. Cl.: H02J 9/06, H02J 3/14

(54) **INTELLIGENT PORTABLE ENERGY STORAGE SYSTEM INTERLINKED WITH UNINTERRUPTIBLE POWER SUPPLY**

(30) Priority: 11.02.2020 KR 20200016668
(71) Applicant: Enercamp Co., Ltd., Dalseo-gu, Daegu 42601 (KR)
(72) Inventor: CHOI, Jung Sub, Daegu 42761 (KR); PARK, Jun Nam, Dalseong-gun, Daegu 42943 (KR)
(74) Representative: BCKIP
(86) International application number: PCT/KR2020/008614
(87) International publication number: WO 2021/162182

(57) **Abstract**

This intelligent portable energy storage system interlinked with an uninterruptible power supply comprises: an uninterruptible power supply including a power input terminal to which power is input from an external power source and an output terminal with which a load device is coupled; a plurality of output ports for coupling the load device; a communication module for receiving external data; and an energy storage device including an analysis processor for learning and analyzing the external data received by the communication module and the power consumption patterns of a user, wherein, when a power supply cutoff time is detected through the learning and analysis by the analysis processor, the energy storage device is cut off from regular charging received from the uninterruptible power supply and supplies power to the load device. The analysis processor provided in the energy storage device can analyze, through learning, power consumption patterns, environmental information, and/or disaster information, control the charging speed and/or charging amount of the energy storage device on the basis of such learning data, and control output according to the priority of the load device.

## Description

### FIELD OF THE INVENTION

The present invention relates to a portable energy storage system, and more specifically, relates to an intelligent portable energy storage system.

### Background of the Invention

In general, various electronics of electrical/electronic devices that require power are used by connecting to commercial alternating current power (e.g. AC220V) provided by the electric power company (e.g. Korea Electric Power Corporation) to outlets provided at home or in the office. In addition, in places where commercial alternating current power sources are not provided, embedded or removable battery installed on the electronics is used to receive direct current or alternating current power instead of commercial alternating current power.

In recent years, as social interest in outdoor activities has increased, the demand to operate various electronics using batteries is increasing. In other words, as interest in outdoor activities increases, the population to enjoy outdoor activities such as camping, fishing, and vacations has increased significantly, and outdoor culture such as camping has changed into a family activity, and there is a tendency to use various electronics that use commercial power sources outdoors.

Conventional portable energy storage systems consist of chargers, battery packs, and inverters, but chargers, battery packs, and inverters are each separately configured, which is not only inconvenient, but also not easy to install.

An integrated energy storage system is known to eliminate this inconvenience. This all-in-one energy storage system makes it convenient to use as a power system in the event of a power outage at home or in a hospital, or outdoors without power.

However, there is a problem that the conventional portable energy storage system is not equipped with a processor for optimal operation of the energy storage system based on various changes, namely environmental information such as power consumption pattern, season, temperature, weather, disaster information such as disaster and relief messages.

### DETAILED DESCRIPTION OF THE INVENTION

### TECHNICAL TASK

The present invention is provided to solve the problems as described above,
wherein, when the energy storage device is connected to an uninterruptible power supply to supply power to the load device, an analysis processor in the energy storage device learns and analyzes at least one of electricity consumption pattern, environmental information or disaster information, and based on the study data, the speed and/or amount of charging the energy storage device is controlled and, based on the priority of the load device, the output power is controlled.

The present invention aims to supply power continuously and longer than conventional uninterruptible power supply by introducing auxiliary energy supply modules supporting charging through renewable energy such as solar power to the energy storage device, thereby to increase the convenience of carrying.

### TOOLS TO SOLVE THE TASK

In one embodiment, the present invention provides an intelligent portable energy storage system comprising:
an uninterruptible power supply comprising a power input terminal to which power is input from an external power source and an output terminal with which a load device is coupled;
a plurality of output ports for coupling the load device;
a communication module for receiving external data; and
an energy storage device including an analysis processor for learning and analyzing the external data received by the communication module and the power consumption patterns of a user,
wherein,
   when a power supply cutoff time is detected through the learning and analysis by the analysis processor, the energy storage device is cut off from regular charging received from the uninterruptible power supply and supplies power to the load device.

The energy storage device of the present invention determines the priority of the load device based on learning and analysis by the analysis processor, and by the order from the low priority, the power supply to the combined output port connected to a load device is blocked and charging or output power is controlled.

The uninterruptible power supply of the present invention further comprises a docking unit, and the energy storage device can be mounted on the docking portion of the uninterruptible power supply for charging or storage of power after use.

The power supply cutoff time can be determined by a disaster prevention message about a power supply cutoff received through the communication module.

The uninterruptible power supply of the present invention comprises a power sensing unit for detecting the power outage signal, and the energy storage device determines the power supply cutoff time when the power sensing unit in the uninterruptible power supply detects the power outage signal.

The analysis processor controls the charging speed or charging amount of the uninterruptible power supply device by recognizing the power supply cutoff time early, based on the learning and analysis.

The output port of the energy storage device is equipped with an on / off button capable of setting the forced output lock, and when pressing the on / off button for a predetermined time, the output port can be changed to a lock mode.

Among the output port, an output port set to the lock mode may be coupled with a load device having a high priority, and when the power supply blocking point is detected, the energy storage device activates the lock mode of the output port set to the lock mode so that the power can be output only to the corresponding output port.

The energy storage device may further comprise an auxiliary energy supply module configured to be chargeable by renewable energy such as solar power.

When a power supply cutoff is expected, the analysis processor may maintain a charging state from the uninterruptible power supply from the time when the power supply cutoff is expected to the power supply cutoff time,.

The analysis processor determines the priority of the load device based on the analyzed learning data to control the output, but when the power consumption pattern shows a high amount of power consumption by the load device or if the use time of the load device is long, it is possible to increase the priority of the load device and control the output so that power can be supplied as a priority.

The analysis processor may reduce the charging ratio due to renewable energy such as solar power for the uninterruptible power supply device when receiving disaster information and weather forecast information through the communication module with the external data, even if the weather is clear in the case of the area where the usual disaster occurrence is frequent, and increase the rate of charging with only commercial power sources as the external power source to prepare for normal power outage situation through learning.

In another embodiment of the present invention, the intelligent portable energy storage devices linked to the uninterruptible power supply comprises:
a plurality of output ports for coupling with load devices;
a communication module for receiving external data;
an analysis processor for learning and analyzing the external data received by the communication module and the user's power consumption pattern,
wherein, once the power supply cutoff time is detected by learning and analysis by the analysis processor, the continuous power supply is blocked, and the power is supplied to the load device.

The energy storage device determines the priority of the load device based on learning and analysis by the analysis processor, and in the order of low priority, the power supply from the output port coupled to a lower priority load device is blocked first, and charging or output can be controlled.

The analysis processor controls the charging speed or charge amount of the uninterruptible power supply by recognizing the power supply cut off time early based on the learning and analysis.

The output port of the energy storage device is equipped with an on / off button capable of setting the forced output lock, and when pressing the on / off button for a predetermined time, the output port may be changed to lock mode.

Among the output port, an output port set to the lock mode may be coupled with a load device having a high priority, and when the power supply blocking point is detected, the energy storage device activates the lock mode of the output port set to the lock mode so that the power can be output only to the corresponding output port.

When a power supply cutoff is expected, the analysis processor may maintain a charging state from the uninterruptible power supply from the time when the power supply cutoff is expected to the power supply cutoff time.

The analysis processor determines the priority of the load device based on the analyzed learning data to control the output, but when the power consumption pattern shows a high amount of power consumption by the load device or if the use time of the load device is long, it is possible to increase the priority of the load device and control the output so that power can be supplied as a priority.

The analysis processor may reduce the charging ratio due to renewable energy such as solar power for the uninterruptible power supply device when receiving disaster information and weather forecast information through the communication module with the external data, even if the weather is clear in the case of the area where the usual disaster occurrence is frequent, and increase the rate of charging with only commercial power sources as the external power source to prepare for normal power outage situation through learning.

### EFFECTS OF THE INVENTION

The intelligent portable energy storage system interlinked with uninterruptible power supply according to embodiments of the present invention is an energy storage device mounted on the uninterruptible power supply device as a dock type, and the energy storage device can supply power to the load device by activating the uninterruptible power supply function.

In addition, an intelligent portable energy storage system that can be operated in interlinked with an uninterruptible power supply according to embodiments of the present invention analyzes at least one of the power consumption patterns, environmental information and disaster information through learning by the analysis module provided in the energy storage device, and can control the charging speed and / or charge amount of the energy storage device based on these learnings and analysis, and it is possible to efficiently operate the energy storage system by controlling the output according to the priority of the load device.

Furthermore, an intelligent portable energy storage system that can be operated in interlinked with an uninterruptible power supply according to embodiments of the present invention can be used continuously for a longer time than conventional uninterruptible power supply devices by introducing auxiliary energy supply modules supporting charging through renewable energy such as solar power to the energy storage device, thereby increasing the convenience of carrying and the user's satisfaction.

### BRIEF DESCRIPTION OF THE DRAWINGS

Figure 1 is a diagram showing an intelligent portable energy storage system equipped with a dock type uninterruptible power supply according to one embodiment of the present invention.
Figure 2 is a diagram showing an energy storage system and an auxiliary energy supply module according to one embodiment of the present invention,
Figure 3 is a conceptual diagram showing an energy storage device according to one embodiment of the present invention,
Figure 4 is a conceptual diagram showing the power operation method of the energy storage system according to one embodiment of the present invention.

### BEST MODE FOR THE PRACTICE OF THE INVENTION

In order to illustrate the advantages of the operation of the present invention and the purpose achieved by the embodiments of the present invention, hereinafter examples of a preferred embodiments of the present invention are presented and reviewed as references.

First, the terms used in the present application are merely used to describe a particular embodiment, and are not intended to limit the present invention, and the expression of the singular may include a plurality of expressions, unless they are clearly meant differently in context. In addition, in this application, the terms "include" or "have" are intended to specify the existence of the features, numbers, steps, operations, components, parts or combinations therein described in the specification, and it should be understood that it does not pre-exclude the possibility of the existence or addition of one or more of other features or numbers, steps, operations, components, parts or a mixture thereof.

In describing the present invention, if it is determined that a specific description of the relevant and publicly known configuration or function may blur the point of the present invention, the detailed description is omitted.

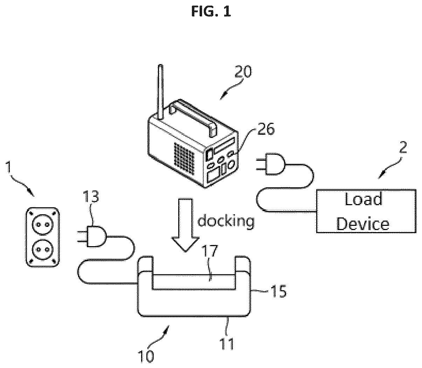

As shown in Figs. 1 to 3, the intelligent portable energy storage system equipped with an uninterruptible power supply of the dock type according to the present invention is configured to include an uninterruptible power supply 10 and an energy storage device 20 mounted on the docking unit 17 of the uninterruptible power supply 10 formed of the docking unit 17.

First, as shown in Figs. 1 to 3, the uninterruptible power supply 10 according to one embodiment of the present invention contains a power input unit in which an external commercial power source is input, and an output terminal 15 to which a load device 2 is connected. The uninterruptible power supply 10 may further comprise a docking unit 17 through which the energy storage device is mounted when implemented as a dock type.

The uninterruptible power supply 10 is equipped with a body, and on one side is provided with a power input stage that is coupled to the outlet 1 for supplying AC power, which is a commercial power source provided in the desired place. The power input stage may be implemented, for example, as a plug 13. In addition, the other side of the uninterruptible power supply 10 is equipped with an output terminal 15 that combines the plug 13 of the load device 2 to be used by the user.

In particular, the body of the uninterruptible power supply 10 may be equipped with a docking unit 17 forming a constant mounting space, and the docking unit 17 may be equipped with a connector for charging. The docking unit 17 is mounted to a portable or mobile energy storage device 20 to be described later. Accordingly, the uninterruptible power supply 10 according to one embodiment of the present invention can perform a function as a charging station to reliably supply electrical energy.

In contrast, when the energy storage device 20 is used by coupled only with the load device 2 without being mounted on the docking unit 17, it is able to perform the function as a conventional power strip. For this purpose, the body of the energy storage device 20 is equipped with a plurality of output terminal 15, and it is also desirable to be able to combine and use various kinds of load device 2.

Next, as shown in Figs. 1 to 3, the energy storage device 20 according to one embodiment of the present invention is configured to be portable, and can be used at any time anywhere when it is necessary to use. After each use, it should be able to charge, store, or charge and store power at the same time.

For this purpose, in one embodiment of the present invention, after using the energy storage device 20 by using the uninterruptible power supply 10 as a charging station, it is possible to charge, store, or charge and store the power by mounting the docking unit 17 of the uninterruptible power supply 10. In addition, the energy storage device 20 is equipped with a plurality of output ports 26, wherein the output port 26 is coupled to the load device 2, and the energy storage device 20 function as an uninterruptible power supply (UPS) to implement diversification of functions.

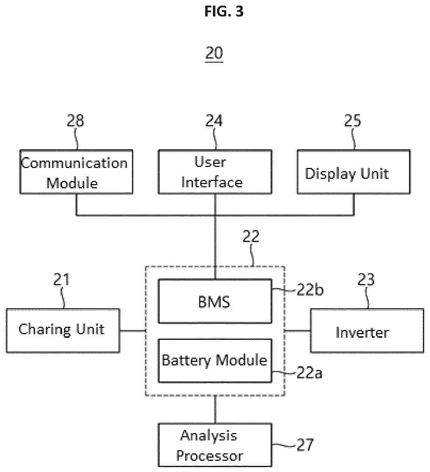

The energy storage device 20 according to one embodiment of the present invention, as shown in Fig. 3, is configured as follows.

That is, the charging unit 21 which converts the alternating current power source to the direct current power source to be able to charge the battery pack 22 is provided, and the battery pack 22 to store the converted direct current power source through the charging unit 21 is provided. In addition, the inverter 23 combined with a plurality of output ports 26 for supplying to the load device 2 by converting the direct current power source of the battery pack 22 into an alternating current power source is provided, and consists of a user interface 24 for the operation of the device and a display unit 25 capable of checking the information or status of the energy storage device 20.

In this case, the battery pack 22 consists of a battery module 22a of a cell type capable of storing electrical energy and a battery management system (BMS, 22b) for managing the battery module 22a. The battery management system 22b is mounted on the docking unit 17 of the energy storage device 20 is an uninterruptible power supply 10, and when the load device 2 is added and the UPS function is activated, the charge amount of the battery module 22a and the output through the inverter 23 are controlled to implement a stable electrical supply.

In particular, the energy storage device 20 according to one embodiment of the present invention is not only portable, but also intelligent, that is, the analysis processor 27 for analyzing the user's power consumption pattern, environmental information and / or disaster information through learning.

That is, the analysis processor 27 of the energy storage device 20 not only learns and analyzes various power consumption patterns by the user, but also can efficiently operate the energy storage device 20 through learning and analyzing environmental information such as external data, weather and / or temperature received by the built-in communication module 28, or disaster information such as emergency disasters or relief messages. In this case, the communication module 28 consists of a wireless communication module such as Wi-Fi, Bluetooth, or LTE.

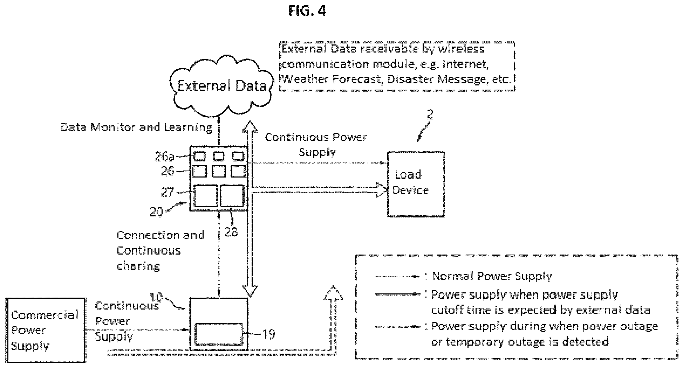

Such an analysis processor 27 may control the charging speed or charge amount by recognizing the power supply cutoff time early based on the analyzed learning data. Here, for example, the power supply cutoff time may be when the electricity supply is uncertain due to wildfire in dry areas in summer, winter, or overseas when electricity use is high, or if disaster prevention messages for the power supply cutoff are received by the communication module 28 (indicated by the solid line in the diagram of Fig. 4), and also if there is a power outage or instantaneous momentary failure that causes power supply cutoff time for a long time, The time of power outage detection may be the time to detect the power outage signal at the power sensing unit 19 contained inside the uninterruptible power supply 10 (city with dotted line of Fig. 4).

In this way, when power supply cutoff is expected, the energy storage device 20 maintains a charge state from the time when the power supply is expected to be cutoff, the always-on charging function of the energy storage device 20 is cut off from the uninterruptible power supply 10 based on the power supply cutoff time detected by the power supply blocking time or the power sensing unit 19, that is, the power supply blocker 19, and at the same time the energy storage device 20 is switched to supply power to the load device coupled to the output port. That is, when the power supply cutoff time is detected, the energy storage device's uninterruptible power supply (UPS) function is enabled, i.e. converts to the function of uninterruptible Power Supply (UPS).

In addition, the external data received by the communication module 28 can anticipate the power supply cutoff time by disaster message or relief message, in addition to the above-mentioned information. For example, when the energy storage device 20 received a message through the communication module 28 that the power supply cutoff would begin at 12-13 o'clock, it can expect that the power supply would be cutoff by 13 o'clock and until the power supply cutoff time, between 12-13 O'clock, it would be able to charge through the uninterruptible power supply 10 in advance between 12-13 o'clock, until the power supply is cutoff.

In addition, when using a load device 2 with a lot of power consumption using a power consumption pattern, it is possible to predict the use forecast time, thereby predicting the power supply cutoff time. For example, if during a certain time zone (e.g. 12-13 o'clock) when many load devices are connected to the energy storage device 20, if the load amount is enough not to last even 3 hours, the unnecessary output port can be controlled or blocked to provide power more than 3 hours.

In addition, in the case of environmental information, it is reasonable to predict the time of power supply blocking through various information depending on the place of use such as temperature, humidity, fine dust, weather, season, outdoors, room, etc.

Thus, after predicting the power supply blocking point early, the optimal operating efficiency of the energy storage device 20 can be increased by controlling the charging speed or the charge amount to correspond.

In this case, in order to acquire various environmental information or disaster information, the energy storage device 20 may be equipped with various sensors such as vibration sensors, temperature sensors, humidity sensors, fine dust sensors, fire sensors, etc.

Furthermore, the analysis processor 27 of the energy storage device 20 can control the output by determining the priority of the load device 2 based on the analyzed learning data. Here, the priority of the load device is also possible to increase the priority in cases such as when the power consumption pattern, such as when the power consumption of a single load is high, or when the use time is long, and in this case, it is possible to increase the operating efficiency by controlling the output so that the power can be supplied preferentially.

The priority of such a load device can be set in various forms, for which each output port 26 of the energy reservoir is equipped with an on / off button 26a. In this case, the on / off button 26a may set the forced output locking function, the forced output lock setting is to set the lock mode by pressing the on / off button 26a for a predetermined time or more, i.e. more than a second. Thus, the load device 2 coupled to the output port 26 with the lock mode set is converted to a UPS function when a power outage occurs at the time of the power supply blocking as described above with a high-priority load device. In this case, in the case of the output port 26 where the lock mode is not set, the power supply is cutoff, and the output port 26 with the lock mode is activated and power is output only to this output port. Therefore, high-priority load devices can also be powered in disasters and emergencies.

In addition to setting the forced output locking function as described above, it is also possible to set the battery available time, and if the set battery usage time is less than the set battery life, the output port is off in the order of high power consumption or the order of priority after priority to extend the battery available time.

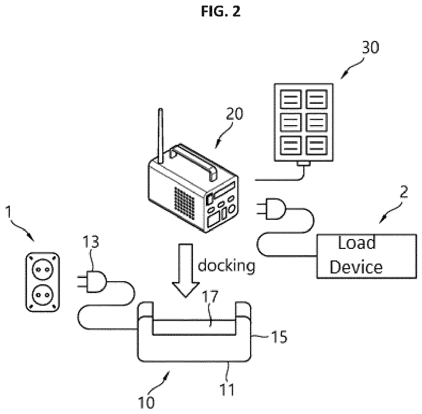

On the other hand, referring to Figure 2, the energy saving device 20 according to one embodiment of the present invention may be further provided with an auxiliary energy supply module 30 so that self-filling by renewable energy is possible. Auxiliary energy supply module 30 is preferably used by natural forces such as renewable energy i.e., solar or wind power to enable the energy storage device 20 to self-fill.

This is because the power supply can be cut off when the power supply is difficult from the external power source when using the energy storage device 20, when consuming all the electrified electricity by long use, in this case, in this case, it is able to increase the user's satisfaction as well as convenience of use by charging and supplying power through energy conversion using renewable energy such as energy sources, i.e. solar or wind power that can be easily obtained outdoors or externally.

Therefore, the energy storage device 20 according to one embodiment of the present invention, that is, the energy storage system has the advantage that it can be used continuously for a longer time than a typical UPS system.

In this way, the auxiliary energy supply module 30 may use a solar panel 31 or an energy storage device 20 that can be removed and removable when solar power is made an energy source as an energy source, such as the city of Figure 2 attached. In addition, although it is not shown in the attached drawing, it is possible to use a wind module if it is desirable to use wind power, but it will be more preferable to use a solar module in that there is a limit to the power output than the solar module.

When introducing a solar panel 41, after learning and analyzing through external data and power usage pattern by the analysis processor 27, the power operation case using such learning data is as follows.

That is, it is also possible to limit the electricity usage for each output port in situations such as power outages based on information related to the weather forecast received from the communication module, the amount of charge by the solar panel and the usual user's power consumption pattern, i.e. electricity consumption amount, based on the learning data by the analysis processor.

In this case, for example, if the energy storage device 20 is not 100% charged, when the solar panel is combined and charged at 1:00 p.m. (at this time, the charging of the commercial power source consumed by the electricity usage fee is automatically blocked, and only the charge by sunlight is used), the weather forecast receives external data information that the weather is clear, If you receive the information that there will be a power outage from 3:00 p.m. a little later, the power operation is as follows, i.e. the charging efficiency caused by the current sunlight until the energy storage device is fully charged, and if the weather forecast continuously expects clearing for the remaining 2 hours, it is possible to charge 100% by 3:00 p.m. when the power outage occurs, in this case, only the charging by sunlight, not commercial power source, is performed.

In the case of disaster information learning, in the case of disaster information learning, power outages can occur frequently in areas where disasters are frequent, in such cases, no matter how clear the weather is in the weather forecast, the charging ratio by sunlight (several times a week or within one hour a day) is reduced as much as possible, and it is possible to prepare for constant static electricity by increasing the rate of charging only with commercial power generation.

In addition, the power operation method using the data can be implemented variously through an analysis processor based on external data and power consumption pattern.

Thus, the present invention is described in reference to the one embodiment shown in the drawing, but this is only an exemplary one, and it will be understood that various variations and even other embodiments are possible from this if a person with ordinary knowledge in the art.

Therefore, the true technical protection range of the present invention will have to be determined by the technical idea of the attached claim.

## Claims

1. An intelligent portable energy storage system interlinked with uninterruptible power supply comprising:
an uninterruptible power supply comprising a power input terminal in which power is input from an external power source, and an output terminal in which the load device is coupled;
a plurality of output ports for coupling of the load device;
a communication module for receiving external data; and
an energy storage device comprising an analysis processor for learning and analyzing the external data received by the communication module and the user's power consumption pattern,
wherein, the energy storage device provides power supply to load device, when the power supply cutoff time is detected by learning and analysis by the analysis processor, and the continuous charging from the uninterruptible power supply is blocked.

2. The intelligent portable energy storage system of claim 1, wherein the energy storage device determines a priority of the load device based on learning and analysis by the analysis processor, and blocks the power supply from the output port coupled with a low-priority load device according to the order in which the load device is low priority, and to control charging or output.

3. The intelligent portable energy storage system of claim 1, wherein the uninterruptible power supply further comprises a docking unit, and the energy storage device is mounted on the docking portion of the uninterruptible power supply for power charging or storage after use.

4. The intelligent portable energy storage system of claim 1, wherein the power supply cutoff time is received through the communication module 28 as a disaster prevention message.

5. The intelligent portable energy storage system of claim 1, wherein the uninterruptible power supply comprises a power sensing unit for detecting the power outage signal, and the energy storage device and a power cutoff time is determined when the power outage signal is detected by the power sensing unit of the uninterruptible power supply.

6. The intelligent portable energy storage system of claim 1, wherein the analysis processor recognizes the power supply blocking point early based on the learning and analysis to control the charging speed or charge amount of the uninterested power supply.

7. The intelligent portable energy storage system of claim 1, wherein the output port of the energy storage device is equipped with an on / off button capable of setting the forced output lock, and when the on / off button is pressed over a predetermined time, the output port changed to a lock mode.

8. The intelligent portable energy storage system of claim 7, wherein the output port set to the lock mode is combined with a load device having a high priority, and the power output is output only to the output port by activating the lock mode of the output port set to the lock mode when the power supply blocking point is detected.

9. The intelligent portable energy storage system of claim 1, wherein the energy storage device further comprises an auxiliary energy supply module configured to be filled by sunlight.

10. The intelligent portable energy storage system of claim 1, wherein the analysis processor maintains a charge state from the uninterruptible power supply to the time of the power supply block from the time when the power supply blocking is expected.

11. The intelligent portable energy storage system of claim 1, wherein the analysis processor determines the priority of the load device based on the analyzed learning data to control the output, but when the power consumption pattern has a high amount of power consumption of the load device or if the use time of the load device is a long time, and to control the output so that the power can be supplied preferably.

12. The intelligent portable energy storage system of claim 1, wherein the analysis processor receives disaster information and weather forecast information through the communication module with the external data, in the case of the area where the usual disaster occurrence is frequent, even if the weather is clear in the weather forecast information, reduces the charging ratio by sunlight to the uninterruptible power supply and increases the rate of charging only to commercial power sources with the external power source to prepare for the constant static situation through learning.

13. An intelligent portable energy storage system interlinked with uninterruptible power supply comprising:
a plural output ports for coupling load device;
a communication module for receiving external data; and
an analysis processor for learning and analyzing the external data received by the communication module and the user's power consumption pattern,
wherein, when the power supply cutoff time is detected by learning and analysis by the analysis processor, the continuous charging from the uninterruptible power supply is blocked, and to supply power to the load device.

14. The intelligent portable energy storage system of claim 1, wherein the energy storage device determines the priority of the load device based on learning and analysis by the analysis processor, and blocks the power supply from the output port combined with a low-priority load device according to the order in which the load device is low priority, and to control charging or output.

15. The intelligent portable energy storage system of claim 13, wherein the analysis processor recognizes the power supply blocking point early based on the learning and analysis to control the charging speed or charge amount of the uninterested power supply.

16. The intelligent portable energy storage system of claim 13, wherein the output port of the energy storage device is equipped with an on / off button capable of setting the forced output lock, and when the on / off button is pressed over a predetermined time, wherein the output port is changed to a lock mode.

17. The intelligent portable energy storage system of claim 16, wherein the output port set to the lock mode of the output port is combined with a load device having a high priority, and the power outputs only to the output port activated the lock mode of the output port set to the lock mode when the power supply cutoff time is detected.

18. The intelligent portable energy storage system of claim 13, wherein the uninterruptible power supply device maintains a charge state from the uninterruptible power supply to the time of the power supply cutoff from the time when the power supply cutoff is expected.

19. The intelligent portable energy storage system of claim 13, wherein the analysis processor determines the priority of the load device based on the analyzed learning data to control the output, but when the power consumption pattern has a high power consumption of the load device or if the use time of the load device is long time, and to control the output so that the power can be supplied preferentially.

20. The intelligent portable energy storage system of claim 1, wherein the analysis processor receives disaster information and weather forecast information through the communication module with the external data, in the case of the area where the usual disaster occurrence is frequent, even if the weather is clear in the weather forecast information, reduce the charging ratio by sunlight to the uninterruptible power supply device and increase the rate of charging only with commercial power sources to the external power source, and prepares for the constant static situation through learning.
